# EUROPÄISCHE PATENTSCHRIFT

(11) **EP 4 139 589 B1**
(45) Veröffentlichungstag und Bekanntmachung des Hinweises auf die Patenterteilung: **25.10.2023**
(21) Anmeldenummer: 21718521.4
(22) Anmeldetag: 06.04.2021
(51) Int. Cl.: F16H 61/688, F16H 61/00, B60K 6/48, B60W 30/18, F16H 61/20

(54) **VERFAHREN ZUM BETREIBEN EINES DOPPELKUPPLUNGSGETRIEBES EINES KRAFTFAHRZEUGS**
METHOD FOR OPERATING A DUAL CLUTCH TRANSMISSION OF A MOTOR VEHICLE
PROCÉDÉ DE FONCTIONNEMENT D'UNE TRANSMISSION À DOUBLE EMBRAYAGE D'UN VÉHICULE À MOTEUR

(30) Priorität: 20.04.2020 DE 102020110610
(43) Veröffentlichungstag der Anmeldung: 01.03.2023
(73) Patentinhaber: Audi AG, 85045 Ingolstadt (DE)
(72) Erfinder: SZEPPAT, Enrico, 09328 Lunzenau OT Göritzhain (DE); GUNDLACH, Lutz, 85049 Ingolstadt (DE)
(74) Vertreter: Bierschneider, Walter
(86) Internationale Anmeldenummer: PCT/EP2021/058878
(87) Internationale Veröffentlichungsnummer: WO 2021/213795

(56) Entgegenhaltungen:
- DE-A1- 19 950 696
- DE-A1-102017 218 798
- DE-A1-102018 204 571

## Beschreibung

Die Erfindung betrifft ein Verfahren zum Betreiben eines Doppelkupplungsgetriebes eines Kraftfahrzeugs gemäß dem Oberbegriff von Patentanspruch 1.

Die DE 10 2010 028 026 A1 offenbart ein Verfahren zum Betreiben eines Hybridantriebsstrangs für ein Fahrzeug, mit einem Verbrennungsmotor zum verbrennungsmotorischen Fahren und mehreren Elektromaschinen zum elektrischen Fahren und Anfahren. Bei dem Verfahren wird zumindest eine schaltbare Wirkverbindung zwischen dem Verbrennungsmotor und den Teilgetrieben eines Zahnradgetriebes zum zugkraftunterbrechungsfreien Fahren hergestellt. Außerdem ist es vorgesehen, dass jede schaltbare Wirkverbindung zwischen einem der Teilgetriebe und dem Verbrennungsmotor schlupflos hergestellt wird. Ferner kann zum Realisieren der Parksperrenfunktion ein einer geraden Gangstufe zugeordnetes Gangstufen-Schaltelement geschlossen werden und/oder ein erstes Schaltelement sowie ein einer ungeraden Gangstufe zugeordnetes Gangstufen-Schaltelement geschlossen werden. Ferner kann vorgesehen sein, dass zum Realisieren der Parksperrenfunktion ein erstes Schaltelement und ein einer ungeraden Gangstufe zugeordnetes Gangstufen-Schaltelement geschlossen werden und/oder dass zum Realisieren der Parksperrenfunktion ein zweites Schaltelement und ein einer geraden Gangstufe zugeordnetes Gangstufen-Schaltelement geschlossen werden.

Außerdem ist der DE 199 50 696 A1 ein Doppelkupplungsgetriebe für ein Kraftfahrzeug als bekannt zu entnehmen. Das Doppelkupplungsgetriebe weist eine einen Anfahrgang aufweisend und mit einer ersten Kupplung verbundene erste Getriebeeingangswelle, eine einen Fahrgang aufweisende und mit einer zweiten Kupplung verbundende zweite Getriebeeingangswelle und eine gemeinsame Getriebeabtriebswelle auf. Dabei ist es vorgesehen, dass mindestens einer der Getriebeeingangswellen mehrere Gänge zugeordnet sind, wobei in einer Parksperrenfunktion zwei einer der Getriebeeingangswellen zugeordnete Gänge gleichzeitig schaltbar sind.

Des Weiteren offenbart die DE 10 2017 218 798 A1, auf welchem die zweiteilige Anspruchsfassung basiert, ein Verfahren zur Steuerung eines Fahrzeugs mit einem Doppelkupplungsgetriebe Aufgabe der vorliegenden Erfindung ist es, ein Verfahren zum Betreiben eines Doppelkupplungsgetriebes eines Kraftfahrzeugs, sodass ein besonders komfortabler Betrieb des Kraftfahrzeugs realisiert werden kann.

Diese Aufgabe wird erfindungsgemäß durch ein Verfahren mit den Merkmalen des Patentanspruchs 1. Vorteilhafte Ausgestaltungen mit zweckmäßigen Weiterbildungen der Erfindung sind in den übrigen Ansprüchen angegeben.

Die Erfindung betrifft ein Verfahren zum Betreiben eines Doppelkupplungsgetriebes eines vorzugsweise als Kraftwagens, insbesondere als Personenkraftwagen, ausgebildeten Kraftfahrzeugs. Beispielsweise ist wenigstens ein auch als Fahrzeugrad bezeichnetes Rad des Kraftfahrzeugs über das Doppelkupplungsgetriebe antreibbar. Insbesondere können wenigstens oder genau zwei Räder des Kraftfahrzeugs über das Doppelkupplungsgetriebe angetrieben werden, wodurch beispielsweise das Kraftfahrzeug insgesamt angetrieben werden kann. Dies bedeutet, dass das Kraftfahrzeug in seinem vollständig hergestellten Zustand das Doppelkupplungsgetriebe und das Rad beziehungsweise die Räder aufweist. Das jeweilige Rad ist beispielsweise ein Bodenkontaktelement, über welches das Kraftfahrzeug in Fahrzeughochrichtung nach unten an einem Boden abgestützt oder abstützbar ist. Wird das Kraftfahrzeug entlang des Bodens gefahren, während das Kraftfahrzeug in Fahrzeughochrichtung nach unten hin an dem Boden abgestützt ist, so rollt das Rad an dem Boden ab.

Das Doppelkupplungsgetriebe weist ein erstes Teilgetriebe und ein zweites Teilgetriebe auf. Beispielsweise weist das Doppelkupplungsgetriebe außerdem eine dem ersten Teilgetriebe zugeordnete erste Kupplung und eine dem zweiten Teilgetriebe zugeordnete zweite Kupplung auf. Beispielsweise weist das Kraftfahrzeug einen Antriebsmotor auf, mittels welchem das Kraftfahrzeug über das Doppelkupplungsgetriebe angetrieben werden kann. Dabei umfasst der Antriebsmotor eine beispielsweise als Kurbelwelle ausgebildete Abtriebswelle. Unter dem Merkmal, dass die erste Kupplung dem ersten Teilgetriebe zugeordnet ist, kann insbesondere verstanden werden, dass das erste Teilgetriebe, insbesondere eine Getriebeeingangswelle des ersten Teilgetriebes, über die erste Kupplung beziehungsweise mittels der ersten Kupplung drehmomentübertragend mit der Abtriebswelle gekoppelt werden kann, insbesondere während die zweite Kupplung geöffnet ist. Unter dem Merkmal, dass die zweite Kupplung dem zweiten Teilgetriebe zugeordnet ist, kann insbesondere verstanden werden, dass das zweite Teilgetriebe, insbesondere eine zweite Getriebeeingangswelle des zweiten Teilgetriebes, über die zweite Kupplung beziehungsweise mittels der zweiten Kupplung drehmomentübertragend mit der Abtriebswelle gekoppelt werden kann, insbesondere während die erste Kupplung geöffnet ist. Somit kann beispielsweise das Kraftfahrzeug über das Doppelkupplungsgetriebe und insbesondere über das erste Teilgetriebe von dem Antriebsmotor angetrieben werden, während ein von dem Antriebsmotor bewirktes Antreiben des Kraftfahrzeugs über das zweite Teilgetriebe unterbleibt. Ferner kann das Kraftfahrzeug über das Doppelkupplungsgetriebe und dabei über das zweite Teilgetriebe von dem Antriebsmotor angetrieben werden, während ein durch den Antriebsmotor bewirktes Antreiben des Kraftfahrzeugs über das erste Teilgetriebe unterbleibt. Die jeweilige Kupplung ist vorzugsweise als eine Reibkupplung, insbesondere als eine Lamellenkupplung, ausgebildet, wodurch ein besonders hoher Komfort, insbesondere Fahrkomfort, des Kraftfahrzeugs realisiert werden kann.

Bei dem Verfahren befindet sich das Doppelkupplungsgetriebe, insbesondere zunächst, in einem Parksperrenzustand, in welchem eine Parksperre beziehungsweise eine Parksperrenfunktion des Doppelkupplungsgetriebes aktiviert ist. In dem Parksperrenzustand sind, insbesondere wenigstens oder genau, zwei Gänge eines der Teilgetriebe gleichzeitig eingelegt. Vorzugsweise ist es vorgesehen, dass in dem Parksperrenzustand die dem einen Teilgetriebe, dessen zwei Gänge gleichzeitig eingelegt sind, zugeordnete Kupplung geschlossen ist. Vorzugsweise ist es vorgesehen, dass in dem Parksperrenzustand die jeweils andere Kupplung geöffnet ist. Alternativ oder zusätzlich ist es denkbar, dass in dem Parksperrenzustand nur ein Gang des anderen Teilgetriebes eingelegt ist. Ferner ist es denkbar, dass in dem Parksperrenzustand alle Gänge des anderen Teilgetriebes ausgelegt sind. Vorzugsweise sind in dem Parksperrenzustand die Kupplungen gleichzeitig geöffnet.

Dadurch, dass in dem Parksperrenzustand die zwei Gänge des einen Teilgetriebes gleichzeitig eingelegt sind und vorzugsweise die dem einen Teilgetriebe zugeordnete Kupplung geschlossen ist, insbesondere während die andere Kupplung geöffnet ist, ist das Doppelkupplungsgetriebe verspannbar oder verspannt, beispielsweise durch eine auf das Kraftfahrzeug wirkende Hangabtriebskraft beziehungsweise durch ein durch die Hangabtriebskraft bewirktes Hangabtriebsdrehmoment, welches beispielsweise über eine Getriebeabtriebswelle des Doppelkupplungsgetriebes in das Doppelkupplungsgetriebe, insbesondere in das eine und andere Teilgetriebe, eingeleitet wird.

Das Doppelkupplungsgetriebe umfasst außerdem eine den Teilgetrieben gemeinsame und sowohl von dem ersten Teilgetriebe als auch von dem zweiten Teilgetriebe antreibbare Getriebeausgangswelle, welche beispielsweise die zuvor genannte Getriebeabtriebswelle sein kann. Unter dem Merkmal, dass die Getriebeausgangswelle von dem ersten Teilgetriebe und von dem zweiten Teilgetriebe antreibbar ist, kann insbesondere verstanden werden, dass die Getriebeausgangswelle beispielsweise drehmomentübertragend mit einer ersten Teilgetriebeausgangswelle des ersten Teilgetriebes gekoppelt oder koppelbar ist, wobei beispielsweise die Getriebeausgangswelle drehmomentübertragend mit einer zweiten Teilgetriebeausgangswelle des zweiten Teilgetriebes koppelbar oder gekoppelt ist. Insbesondere kann die Getriebeausgangswelle über jeweilige Zahnräder mit der jeweiligen Teilgetriebeausgangswelle drehmomentübertragend koppelbar oder gekoppelt sein.

Zu der Hangabtriebskraft und dem daraus resultierenden Hangabtriebsdrehmoment kommt es beispielsweise dann, wenn das Kraftfahrzeug an einem Hang, das heißt an einem Gefälle, abgestellt ist. Dabei kann durch den Parksperrenzustand ein unerwünschtes Wegrollen des Kraftfahrzeugs vermieden werden. Da in dem Parksperrenzustand die Gänge des einen Teilgetriebes gleichzeitig eingelegt sind, wird das eine Teilgetriebe auch als gesperrtes Teilgetriebe bezeichnet, und vorzugsweise wird das andere Teilgetriebe als nichtgesperrtes Teilgetriebe bezeichnet. Vorzugsweise sind in dem Parksperrenzustand alle Gänge des anderen Teilgetriebes ausgelegt, oder in dem Parksperrenzustand ist wenigstens oder genau ein Gang des anderen Teilgetriebes eingelegt.

Um nun einen besonders hohen Komfort, insbesondere Fahrkomfort, des Kraftfahrzeugs realisieren zu können, das heißt, um einen besonders komfortablen Betrieb des Kraftfahrzeugs ermöglichen zu können, ist es erfindungsgemäß vorgesehen, dass zum Beenden des Parksperrenzustands zumindest ein auch mit a) bezeichneter erster Schritt des Verfahrens sowie ein auch mit b) bezeichneter zweiter Schritt des Verfahrens durchgeführt werden, wobei vorzugsweise der zweite Schritt zeitlich nach dem ersten Schritt durchgeführt wird. Insbesondere wird beispielsweise der zweite Schritt nach Beenden des ersten Schritts durchgeführt. Bei dem ersten Schritt des Verfahrens wird ein von einem Antriebselement des Kraftfahrzeugs bewirktes beziehungsweise bereitgestelltes Drehmoment über die den Teilgetrieben gemeinsame Getriebeausgangswelle in das eine und andere Teilgetriebe eingeleitet, während die Gänge des einen Teilgetriebes gleichzeitig eingelegt sind. Hierzu wird beispielsweise das von dem Antriebselement bereitgestellte Drehmoment in die Getriebeausgangswelle eingeleitet beziehungsweise auf die Getriebeausgangswelle übertragen oder ausgeübt, wobei das in die Getriebeausgangswelle eingeleitete Drehmoment von der Getriebeausgangswelle in das eine und andere Teilgetriebe eingeleitet, das heißt auf das eine und andere Teilgetriebe ausgeübt wird.

Bei dem zweiten Schritt des Verfahrens wird zumindest oder genau einer der bei dem ersten Schritt gleichzeitig eingelegten Gänge des einen Teilgetriebes ausgelegt. Vorzugsweise wird der zweite Schritt durchgeführt, nachdem mit dem Einleiten des Drehmoments in das eine und andere Teilgetriebe begonnen wurde und insbesondere während das Drehmoment noch in das eine und andere Teilgetriebe eingeleitet wird. Durch das Einleiten des Drehmoments in das eine und andere Teilgetriebe kann die zuvor beschriebene Verspannung des Doppelkupplungsgetriebes zumindest reduzier oder aufgehoben werden, sodass dann der zumindest eine Gang ausgelegt werden kann, ohne dass es zu einem übermäßigen und beispielsweise von Insassen des Kraftfahrzeugs wahrnehmbaren Ruck kommt. Das erfindungsgemäße Verfahren ermöglicht es somit, den Parksperrenzustand zu beenden, das heißt die zuvor genannte Parksperre auszulegen oder zu deaktivieren, ohne dass es zu einem übermäßigen, von Insassen des Kraftfahrzeugs spürbaren Ruck kommt.

Das Doppelkupplungsgetriebe ist vorzugsweise ein Automatikgetriebe, welches seine Gänge automatisch ein- und auslegen kann. Durch gleichzeitiges Einlegen der Gänge des einen Teilgetriebes kann eine mechanische Parksperre realisiert werden. Die Parksperre beziehungsweise der Parksperrenzustand ist vorzugsweise in einem Stillstand des Kraftfahrzeugs eingelegt beziehungsweise aktiviert, um das Kraftfahrzeug unabhängig von einer beispielsweise zusätzlich zu dem Doppelkupplungsgetriebe und somit zusätzlich zu der Parksperre vorgesehenen Feststellbremse gegen ein unerwünschtes Wegrollen zu sichern.

Die zuvor genannte Hangabtriebskraft resultiert dabei aus dem Gewicht des Kraftfahrzeugs. Würde beispielsweise die Parksperre deaktiviert, indem zumindest einer der gleichzeitig eingelegten Gänge ausgelegt würde, ohne dass das Drehmoment auf die zuvor beschriebene Weise in das eine und andere Teilgetriebe eingeleitet würde, so könnte es gegebenenfalls zu einem starken, auch als Entlastungsruck bezeichneten Ruck kommen, da die Verspannung des Doppelkupplungsgetriebes abrupt gelöst würde. Auch könnte es zu unerwünschten Geräuschen kommen. Die zuvor genannten Nachteile und Probleme können nun durch das erfindungsgemäße Verfahren auf besonders vorteilhafte Weise vermieden werden. Das Einleiten des Drehmoments in das eine und andere Teilgetriebe wird auch als Momenteneintrag bezeichnet, welcher erfindungsgemäß besonders bedarfsgerecht und bauraumsparend über die den Teilgetrieben gemeinsame Getriebeausgangswelle erfolgt.

Die jeweilige Kupplung wird auch als Fahrkupplung bezeichnet. Das Hangabtriebsdrehmoment ist ein Verspannmoment, welches durch das Drehmoment reduziert oder zumindest aufgehoben werden kann. Somit kann die Parksperre ohne übermäßigen Entlastungsruck und somit geräuscharm ausgelegt werden. Insbesondere ermöglicht es die Erfindung, die Parksperre bei zumindest nahezu allen Steigungen ohne übermäßigen Entlastungsruck und ohne störende Geräusche auszulegen. Das Verfahren kann dabei besonders kosten-, gewichts- und bauraumgünstig durchgeführt werden, da beispielsweise ausgehend von herkömmlichen Doppelkupplungsgetrieben keine weiteren Bauteilanpassungen erforderlich sind, um das erfindungsgemäße Verfahren umzusetzen. Das erfindungsgemäße Verfahren kann insbesondere vorteilhaft über eine bestehende Aktoransteuerung beziehungsweise mittels bereits bestehender Aktoren realisiert werden, insbesondere im Hinblick auf das Ein- und Auslegen der Gänge.

Ferner kann beispielsweise eine Drehrichtung, in die das Drehmoment wirkt, besonders bedarfsgerecht eingestellt werden, da erfindungsgemäß das Drehmoment nicht über eine der Kupplungen, sondern abtriebsseitig über die Getriebeausgangswelle in das eine und andere Teilgetriebe eingeleitet wird. Mit anderen Worten, die Getriebeausgangswelle ist auf einer Abtriebs- oder Ausgangsseite des Doppelkupplungsgetriebes angeordnet, da beispielsweise das Doppelkupplungsgetriebe auf seiner Abtriebs- beziehungsweise Ausgangsseite über die Getriebeausgangswelle Antriebsdrehmomente zum Antreiben des Kraftfahrzeugs bereitstellen kann. Da nun erfindungsgemäß vorgesehen ist, das Drehmoment über die Getriebeausgangswelle und nicht über eine der Fahrkupplungen in das eine und andere Teilgetriebe einzuleiten, wird das Drehmoment nicht eingangsseitig, sondern ausgangsseitig, das heißt über die Ausgangsseite beziehungsweise von der Ausgangsseite des Doppelkupplungsgetriebes her in das eine und andere Teilgetriebe eingeleitet. Die Erfindung ermöglicht es, die Parksperre bei zumindest nahezu allen Steigungen ohne Entlastungsruck und ohne störende Geräusche auszulegen. Außerdem ist es möglich, dass dadurch, dass das Drehmoment über die Ausgangsseite des Doppelkupplungsgetriebes in das Doppelkupplungsgetriebe beziehungsweise in das eine und andere Teilgetriebe eingeleitet wird, die zuvor beschriebene Verspannung unabhängig von einer von dem Fahrer des Kraftfahrzeugs gewünschten Fahrtrichtung, die beispielsweise aus einer von dem Fahrer gewählten Fahrstufe des Doppelkupplungsgetriebes abgeleitet wird, zu reduzieren oder aufzuheben. Insbesondere kann das ausgangsseitige Einleiten des Drehmoments in das eine und andere Teilgetriebe das Drehmoment in das eine und andere Teilgetriebe unabhängig davon eingeleitet werden, ob und welche der Kupplungen gegebenenfalls geschlossen ist oder geschlossen wird, um beispielsweise das Kraftfahrzeug nach dessen Stillstand, während welchem die Parksperre eingelegt ist oder war, anzufahren, das heißt, insbesondere über die genannte Fahrstufe, in Bewegung zu setzen.

Als besonders vorteilhaft hat es sich gezeigt, wenn als das Antriebselement eine elektrische Maschine verwendet wird. Insbesondere ist die elektrische Maschine ein Elektromotor oder als Elektromotor betreibbar, sodass mittels der elektrischen Maschine das Drehmoment besonders bedarfsgerecht bereitgestellt werden kann. Insbesondere kann durch Verwendung der elektrischen Maschine eine Drehrichtung, in welche das Drehmoment wirkt, bedarfsgerecht eingestellt werden, sodass beispielsweise eingestellt werden kann, dass das Drehmoment in eine erste Drehrichtung oder in eine der ersten Richtung entgegengesetzte zweite Drehrichtung wirkt.

Die elektrische Maschine ist beispielsweise ein auch als Triebstranggenerator bezeichneter Generator. Mit anderen Worten kann die elektrische Maschine beispielsweise in einem Generatorbetrieb und somit als Generator betrieben werden. In dem Generatorbetrieb wird die elektrische Maschine, insbesondere deren Rotor, beispielsweise von der Getriebeausgangswelle und dabei über die Getriebeausgangswelle von dem Antriebsmotor angetrieben, wobei der der Generator infolge seines Antreibens elektrische Energie bereitstellt. Um beispielsweise die Parksperre auszulegen, wird die elektrische Maschine in einem Motorbetrieb und somit als Elektromotor betrieben, mittels welchem das Drehmoment auf die Getriebeausgangswelle ausgeübt und über die Getriebeausgangswelle in das eine und andere Teilgetriebe eingeleitet werden kann. Der Generator ist dabei auf der Abtriebsseite beziehungsweise Ausgangsseite des Doppelkupplungsgetriebes angeordnet. Erfindungsgemäß kommt der elektrischen Maschine somit eine Doppelfunktion zu. Zum einen wird die elektrische Maschine als Generator zum Bereitstellen von elektrischer Energie genutzt. Zum anderen wird die elektrische Maschine genutzt, um das Drehmoment in das eine und andere Teilgetriebe einzuleiten und in der Folge die Parksperre ruck- und geräuschlos oder zumindest ruck- und geräuscharm auszulegen.

Alternativ oder zusätzlich kann mittels der elektrischen Maschine, insbesondere mittels des Generators, eine vorteilhafte Rekuperation realisiert werden. Hierbei treiben beispielsweise die Räder des Kraftfahrzeugs die Getriebeausgangswelle an, welche den Generator beziehungsweise dessen Stator antreibt. Dadurch wird kinetische Energie des Kraftfahrzeugs in elektrische Energie umgewandelt, die von dem Generator bereitgestellt wird.

Um dabei die Parksperre besonders komfortabel auslegen zu können, ist es in weiterer Ausgestaltung der Erfindung vorgesehen, dass der Rotor der elektrischen Maschine koaxial zu der Getriebeausgangswelle angeordnet ist. Die elektrische Maschine umfasst beispielsweise den genannten Rotor und einen Stator, wobei der Rotor von dem Stator antreibbar und dadurch um eine Maschinendrehachse relativ zu dem Stator drehbar ist. Ferner ist es denkbar, dass der Rotor achsparallel zu der Getriebeausgangswelle angeordnet ist, sodass die axiale Richtung der Getriebeausgangswelle nicht mit der axialen Richtung des Rotors zusammenfällt, sondern parallel zu der axialen Richtung des Rotors verläuft. Ferner ist es denkbar, dass der Rotor mit der Getriebeausgangswelle, insbesondere mittels einer Koppeleinrichtung, koppelbar und von der der Getriebeausgangswelle entkoppelbar ist.

Eine weitere Ausführungsform zeichnet sich dadurch aus, dass der Rotor der elektrischen Maschine auf der Getriebeausgangswelle oder auf einer drehfest mit der Getriebeausgangswelle verbundenen und koaxial zu der Getriebeausgangswelle angeordneten Welle angeordnet ist. Dadurch kann das Drehmoment besonders bauraumgünstig sowie effizient und effektiv in das eine und andere Teilgetriebe eingeleitet werden.

Als besonders vorteilhaft hat es sich gezeigt, wenn bei dem zweiten Schritt (Schritt b)) der zumindest eine Gang ausgelegt wird, während der andere, bei dem ersten Schritt (Schritt a)) eingelegte Gang eingelegt bleibt. Hierdurch kann die Parksperre besonders komfortabel sowie schnell ausgelegt, das heißt deaktiviert werden.

Um einen besonders hohen Komfort des Kraftfahrzeugs zu realisieren, ist es in weiterer Ausgestaltung der Erfindung vorgesehen, dass das Verfahren bei einem Stillstand des Kraftfahrzeugs durchgeführt wird. Somit ist es vorzugsweise vorgesehen, dass zumindest die Schritte a) und b) bei einem Stillstand des Kraftfahrzeugs durchgeführt werden.

Um dabei einen besonders hohen Fahrkomfort realisieren zu können, ist es in weiterer Ausgestaltung der Erfindung vorgesehen, dass der andere Gang, der bei dem zweiten Schritt eingelegt ist beziehungsweise bleibt, für ein auf den Stillstand und auf das Beenden des Parksperrenzustands folgendes Anfahren des Kraftfahrzeugs verwendet wird. Dadurch kann ein zumindest nahezu nahtloser und von den Insassen des Kraftfahrzeugs nicht spürbarer Übergang von dem Stillstand in das Anfahren realisiert werden, wobei der Parksperrenzustand ohne übermäßigen Entlastungsruck beendet werden kann. Darunter, dass der andere Gang für das Anfahren verwendet wird, ist insbesondere zu verstehen, dass das Kraftfahrzeug über den anderen Gang von dem Antriebsmotor angetrieben und dadurch angefahren wird, insbesondere während die oder alle anderen Gänge des Doppelkupplungsgetriebes ausgelegt sind.

Um das Verfahren besonders einfach, kostengünstig und komfortabel realisieren zu können, ist es in weiterer Ausgestaltung der Erfindung vorgesehen, dass zum Anfahren des Kraftfahrzeugs das Kraftfahrzeug mittels des zusätzlich zu dem Antriebselement vorgesehenen Antriebsmotors angetrieben wird.

Mit anderen Worten ist beispielsweise das Antriebselement eine erste Komponente des Kraftfahrzeugs, und der Antriebsmotor ist eine zusätzlich zur ersten Komponente vorgesehene, bezüglich der ersten Komponente externe zweite Komponente. Der Antriebsmotor ist vorzugsweise eine Verbrennungskraftmaschine, dessen Abtriebswelle vorzugsweise als Kurbelwelle ausgebildet sein kann. Somit ist die Verbrennungskraftmaschine beispielsweise eine Hubkolbenmaschine. Insbesondere sind der Antriebsmotor und somit dessen Abtriebswelle auf einer der Ausgangsseite gegenüberliegenden Eingangsseite des Doppelkupplungsgetriebes angeordnet, über dessen Eingangsseite die von dem Antriebsmotor bereitstellbaren Antriebsdrehmomente in das Doppelkupplungsgetriebe, insbesondere in die jeweilige Getriebeeingangswelle, eingeleitet werden können.

Als weiterhin besonders vorteilhaft hat es sich gezeigt, wenn das Drehmoment derart bereitgestellt und in das eine und andere Teilgetriebe eingeleitet wird, dass eine durch das Bereitstellen und Einleiten des Drehmoments bewirkte Bewegung des Kraftfahrzeugs in Fahrzeuglängsrichtung unterbleibt. Hierdurch kann eine übermäßige und beispielsweise von Insassen des Kraftfahrzeugs unerwartete, durch das Drehmoment bewirkte Bewegung des Kraftfahrzeugs vermieden werden, sodass die Parksperre besonders komfortabel ausgelegt werden kann, ohne dass dies von den Insassen des Kraftfahrzeugs wahrgenommen wird.

Um die Parksperrenfunktion besonders komfortabel deaktivieren zu können, ist es in weiterer Ausgestaltung der Erfindung vorgesehen, dass das Drehmoment derart bereitgestellt und in das eine und andere Teilgetriebe eingeleitet wird, dass das Drehmoment dem zuvor genannten, durch die auf das Kraftfahrzeug wirkende Hangabtriebskraft bewirkten und in das eine und andere Teilgetriebe eingeleitete Hangabtriebsdrehmoment entgegenwirkt. Dadurch kann die Verspannung des Doppelkupplungsgetriebes, insbesondere des einen Teilgetriebes, zumindest reduziert oder aufgehoben werden, bevor der zumindest eine Gang ausgelegt wird. Nach dem Reduzieren oder Aufheben der Verspannung wird der zumindest eine Gang ausgelegt, wodurch die Parksperre besonders komfortabel deaktiviert wird.

Um ein unerwartetes Verhalten des Kraftfahrzeugs zu vermeiden und in der Folge einen besonders hohen Komfort sicherstellen zu können, ist es in weiterer Ausgestaltung der Erfindung vorgesehen, dass bei dem zweiten Schritt beide, insbesondere alle, Gänge des einen Teilgetriebes ausgelegt werden, die dem einen Teilgetriebe zugeordnete Kupplung geöffnet wird, wenigstens oder genau ein Gang des anderen Teilgetriebes eingelegt und die dem anderen Teilgetriebe zugeordnete Kupplung geschlossen wird. Daraufhin kann beispielsweise das Kraftfahrzeug von dem Antriebsmotor über das andere Teilgetriebe und insbesondere über den eingelegten Gang des anderen Teilgetriebes angetrieben und somit beispielsweise angefahren werden, ohne dass es zu einem unerwarteten und unkomfortablen Verhalten beziehungsweise zu einer unerwarteten Bewegung des Kraftfahrzeugs sowie ohne dass es zu einem übermäßigen Entlastungsruck kommt.

Vorzugsweise ist es vorgesehen, dass das Drehmoment so gestellt, das heißt so in das eine und andere Teilgetriebe eingeleitet wird, dass das eingeleitete Drehmoment dem Verspannmoment, welches aus der Hangabtriebskraft resultiert, entgegenwirkt. Hierzu wird beispielsweise auf dem anderen, nicht gesperrten Teilgetriebe ein vorteilhafter Gang, insbesondere ein Anfahrgang, eingelegt. Die Höhe beziehungsweise der Betrag des Drehmoments wird vorzugsweise so gewählt, dass das Drehmoment idealerweise genau dem Verspannmoment entspricht. Entspricht beispielsweise ein Fahrtrichtungswunsch des Fahrers des Kraftfahrzeugs nicht der dem einen Teilgetriebe zugeordneten Kupplung, das heißt kann beispielsweise über die dem einen Teilgetriebe zugeordnete Kupplung eine Fahrt beziehungsweise ein Anfahren des Kraftfahrzeugs in eine von dem Fahrer des Kraftfahrzeugs gewünschte Richtung nicht bewirkt werden, so ist es von Vorteil zu vermeiden, dass das Drehmoment deutlich höher als das Verspannmoment ist, um eine Bewegung beziehungsweise eine Fahrt des Kraftfahrzeugs in eine der von dem Fahrer gewünschten Richtung entgegengesetzte Richtung zu vermeiden. Sobald beispielsweise durch das Einleiten des Drehmoments in das eine und andere Teilgetriebe das Verspannmoment aufgehoben oder derart reduziert ist, dass das Verspannmoment beispielsweise größer als Null ist und dabei einen Schwellenwert jedoch unterschreitet, kann der zumindest eine, auch als Sperrgang bezeichnete Gang des einen Teilgetriebes ausgelegt werden. Hierdurch wird die Parksperre deaktiviert, ohne dass es zu einem übermäßigen Entlastungsruck kommt.

Das in dem Anspruch 1 erwähnte Kraftfahrzeug ist bevorzugt als Kraftwagen, insbesondere als Personenkraftwagen oder Lastkraftwagen, oder als Personenbus oder Motorrad ausgestaltet.

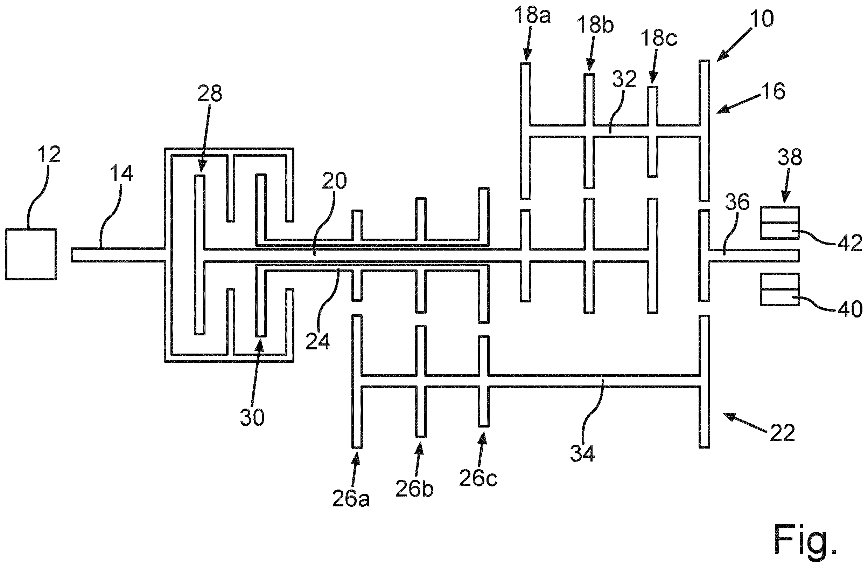

Im Folgenden ist ein Ausführungsbeispiel der Erfindung beschrieben. Hierzu zeigt die einzige Fig. eine schematische Darstellung eines Doppelkupplungsgetriebes eines Kraftfahrzeugs, wobei das Doppelkupplungsgetriebe gemäß einem erfindungsgemäßen Verfahren betrieben wird.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, wobei die vorliegende Erfindung durch die beiliegenden Ansprüche definiert wird.

Die einzige Fig. zeigt in einer schematischen Darstellung ein Doppelkupplungsgetriebe 10 eines Kraftfahrzeugs, welches vorzugsweise als Kraftwagen oder vorzugsweise als Personenkraftwagen ausgebildet ist. Das Kraftfahrzeug weist wenigstens einen Antriebsmotor 12 auf, mittels welchem wenigstens zwei Räder des Kraftfahrzeugs über das Doppelkupplungsgetriebe 10 angetrieben werden können. Durch Antreiben der Räder ist beziehungsweise wird das Kraftfahrzeug insgesamt antreibbar beziehungsweise angetrieben. Die Räder sind Bodenkontaktelemente, über die das Kraftfahrzeug in Fahrzeughochrichtung nach unten hin an einem Boden abstützbar oder abgestützt ist. Die Räder werden auch als Fahrzeugräder bezeichnet und rollen an dem Boden ab, wenn das Kraftfahrzeug entlang des Bodens gefahren wird, während es in Fahrzeughochrichtung nach unten hin über die Räder an dem Boden abgestützt ist. Bei dem Antriebsmotor 12 handelt es sich vorzugsweise um eine beispielsweise als Hubkolbenmaschine ausgebildete Verbrennungskraftmaschine, welche eine beispielsweise als Kurbelwelle ausgebildete Abtriebswelle 14 aufweist. Über die Abtriebswelle 14 kann der Antriebsmotor 12 Antriebsdrehmomente bereitstellen, welche auch als Antriebsmomente bezeichnet werden. Mittels der Antriebsdrehmomente können die Räder über das Doppelkupplungsgetriebe 10 angetrieben werden, wodurch das Kraftfahrzeug insgesamt angetrieben werden kann.

Das Doppelkupplungsgetriebe 10 weist ein erstes Teilgetriebe 16 auf, welches beispielsweise drei erste Gänge 18a-c umfasst. Außerdem weist das erste Teilgetriebe 16 eine erste Getriebeeingangswelle 20 auf. Das Doppelkupplungsgetriebe 10 umfasst darüber hinaus ein zweites Teilgetriebe 22, welches eine zweite Getriebeeingangswelle 24 und zweite Gänge 26a-c aufweist. Die Gänge 18a-c sind beispielsweise ungerade Gänge oder werden auch als ungerade Gänge bezeichnet, wobei beispielsweise der Gang 18a der sogenannte erste Gang, der Gang 18b der sogenannte dritte Gang und der Gang 18c der sogenannte fünfte Gang des Doppelkupplungsgetriebes 10 sein kann. Die Gänge 26a-c werden beispielsweise auch als gerade Gänge bezeichnet oder sind sogenannte gerade Gänge des Doppelkupplungsgetriebes 10, wobei beispielsweise der Gang 26a der zweite Gang, der Gang 26b der vierte Gang und der Gang 26c der sechste Gang des Doppelkupplungsgetriebes 10 sein kann.

Das Doppelkupplungsgetriebe 10 weist auch eine dem Teilgetriebe 16 zugeordnete erste Kupplung 28 auf, welche beispielsweise bezogen auf die Teilgetriebe 16 und 22, insbesondere bezogen auf die Getriebeeingangswellen 20 und 24, ausschließlich dem Teilgetriebe 16 beziehungsweise ausschließlich der Getriebeeingangswelle 20, nicht jedoch dem Teilgetriebe 22 und nicht der Getriebeeingangswelle 24 zugeordnet ist. Das Doppelkupplungsgetriebe 10 umfasst darüber hinaus eine dem Teilgetriebe 22 zugeordnete zweite Kupplung 30, welche beispielsweise bezogen auf die Teilgetriebe 16 und 22, insbesondere bezogen auf die Getriebeeingangswellen 20 und 24, ausschließlich dem Teilgetriebe 22 beziehungsweise ausschließlich der Getriebeeingangswelle 24, nicht jedoch dem Teilgetriebe 16 beziehungsweise nicht jedoch der Getriebeeingangswelle 20 zugeordnet ist. Dies bedeutet, dass mittels der Kupplung 28 bezogen auf die Getriebeeingangswellen 20 und 24 ausschließlich die Getriebeeingangswelle 20 drehmomentübertragend mit der Abtriebswelle 14 verbindbar beziehungsweise koppelbar ist. Mittels der Kupplung 30 ist bezogen auf die Getriebeeingangswellen 20 und 24 ausschließlich die Getriebeeingangswelle 24 mit der Abtriebswelle 14 drehmomentübertragend verbindbar beziehungsweise koppelbar. Außerdem ist vorliegend die Getriebeeingangswelle 24 als eine Hohlwelle ausgebildet, welche vorliegend zumindest teilweise, insbesondere zumindest überwiegend oder vollständig, durch die beispielsweise als Massivwelle ausgebildete Getriebeeingangswelle 20 durchdrungen ist. Das jeweilige Teilgetriebe 16 beziehungsweise 22 weist auch eine jeweilige Seitenwelle 32 beziehungsweise 34 auf. Die Seitenwelle 32 ist eine erste Teilgetriebeausgangswelle des Teilgetriebes 16, da das Teilgetriebe 16 über seine erste Teilgetriebeausgangswelle Antriebsdrehmomenten zum Antreiben der Räder bereitstellen kann. Die Seitenwelle 34 ist eine zweite Teilgetriebeausgangswelle des Teilgetriebes 22, da das Teilgetriebe 22 über seine zweite Teilgetriebeausgangswelle Drehmomente zum Antreiben der Räder bereitstellen kann.

Des Weiteren weist das Doppelkupplungsgetriebe 10 eine den Teilgetrieben 16 und 20, insbesondere den Seitenwellen 32 und 34, gemeinsame Getriebeausgangswelle 36 auf, welche von den Seitenwellen 32 und 34 und somit von beiden Teilgetrieben 16 und 22 antreibbar ist. Hierzu ist die Getriebeausgangswelle 36 über jeweilige Zahnräder beziehungsweise Zahnradpaarungen drehmomentübertragend mit den Seitenwellen 32 und 34, insbesondere gleichzeitig, gekoppelt. Insgesamt ist erkennbar, dass die Getriebeausgangswelle 36 auf einer auch als Abtriebsseite bezeichneten Ausgangsseite des Doppelkupplungsgetriebes 10 angeordnet ist, da das Doppelkupplungsgetriebe 10 insgesamt über die Getriebeausgangswelle 36 und somit auf der Ausgangsseite Antriebsdrehmomente zum Antreiben der Räder bereitstellen kann.

Der Antriebsmotor 12 kann über seine Abtriebswelle 14 wenigstens ein Antriebsdrehmoment bereitstellen, welches über die jeweilige Kupplung 28 beziehungsweise 30 in das jeweilige Teilgetriebe 16 beziehungsweise 22 eingeleitet und darüber auf die Getriebeausgangswelle 36 übertragen werden kann. Auf diese Weise sind über das Doppelkupplungsgetriebe 10 die zuvor genannten Räder von dem Antriebsmotor 12 antreibbar. Vorzugsweise ist es vorgesehen, dass die Kupplung 30, wenn die Kupplung 28 geschlossen ist, geöffnet ist. Außerdem ist es vorzugsweise vorgesehen, dass die Kupplung 28 dann, wenn die Kupplung 30 geschlossen ist, geöffnet ist. Somit ist vorzugsweise stets nur eines der Teilgetriebe 16 und 22 über die jeweilige Kupplung 28 beziehungsweise 30 drehmomentübertragend mit der Abtriebswelle 14 verbunden.

Im Folgenden wird ein Verfahren zum Betreiben des Doppelkupplungsgetriebes 10 beschrieben. Bei dem Verfahren befindet sich das Doppelkupplungsgetriebe 10 zumindest vorübergehend in einem Parksperrenzustand, in welchem beispielsweise die Gänge 18a und 18b des Teilgetriebes 16 gleichzeitig eingelegt sind und vorzugsweise die Kupplung 28 geschlossen ist. Vorzugsweise ist in dem Parksperrenzustand die Kupplung 30 geöffnet und in dem Parksperrenzustand sind vorzugsweise die oder alle Gänge 26a-c des Teilgetriebes 22 ausgelegt. Außerdem ist es vorzugsweise vorgesehen, dass bis auf die zwei eingelegten Gänge 18a und 18b alle übrigen Gänge des Teilgetriebes 16 ausgelegt sind. In dem Parksperrenzustand ist eine mechanische Parksperre aktiviert oder realisiert, mittels welcher insbesondere dann, wenn das Kraftfahrzeug an einem Hang beziehungsweise an einem Gefälle abgestellt ist, gegen ein unerwünschtes Wegrollen gesichert werden kann. Insbesondere dann, wenn das Kraftfahrzeug an dem oder einem Gefälle abgestellt ist, wirkt auf das Kraftfahrzeug eine aus dem Gewicht des Kraftfahrzeugs resultierende Hangabtriebskraft. Aus dieser Hangabtriebskraft resultiert ein Hangabtriebsdrehmoment, welches beispielsweise in dem Parksperrenzustand über die Räder und die Getriebeausgangswelle 36 in das Doppelkupplungsgetriebe 10, insbesondere in das Teilgetriebe 16, eingeleitet wird und somit auf das Doppelkupplungsgetriebe 10, insbesondere auf das Teilgetriebe 16, wirkt. Da dabei beispielsweise die Gänge 18a, b gleichzeitig eingelegt sind, wird das Teilgetriebe 16 verspannt. Mit anderen Worten wirkt das Hangabtriebsdrehmoment als ein Verspannmoment, durch welches das Teilgetriebe 16 verspannt ist. Hierdurch ist die zuvor genannte, mechanische Parksperre realisiert und aktiviert.

Um nun einen besonders komfortablen Betrieb des Kraftfahrzeugs realisieren zu können, wird zum Beenden des Parksperrenzustands bei einem ersten Schritt des Verfahrens ein von einem Antriebselement 38 des Kraftfahrzeugs bewirktes beziehungsweise bereitgestelltes Drehmoment auf die Getriebeausgangswelle 36 ausgeübt und in der Folge über die Getriebeausgangswelle 36 in das gesperrte Teilgetriebe 16 sowie in das Teilgetriebe 22 eingeleitet, während die Gänge 18a, b des Teilgetriebes 16 eingelegt sind und vorzugsweise die dem Teilgetriebe 16 zugeordnete Kupplung 28 geschlossen ist. Bei einem zweiten Schritt des Verfahrens wird - insbesondere nachdem mit dem Einleiten des Drehmoments in das Teilgetriebe 16 begonnen wurde und vorzugsweise während das Drehmoment in das Teilgetriebe 16 eingeleitet wird - zumindest einer der bei dem ersten Schritt eingelegten Gänge 18a, b des Teilgetriebes 16 ausgelegt, während oder wobei beispielsweise ein Auslegen des jeweils anderen Gangs 18b beziehungsweise 18a unterbleibt. Dabei wird das Drehmoment beispielsweise derart bereitgestellt und in das Teilgetriebe 16 beziehungsweise 22 eingeleitet, dass das Drehmoment dem Hangabtriebsdrehmoment entgegenwirkt. Hierdurch wird das Hangabtriebsdrehmoment zumindest reduziert oder aufgehoben. Mit anderen Worten wird hierdurch die zuvor beschriebene Verspannung des Teilgetriebes 16 zumindest reduziert oder aufgehoben, sodass der zumindest eine Gang 18a beziehungsweise 18b ausgelegt werden kann, ohne dass es zu einem übermäßigen, auch als Entlastungsruck bezeichneten Ruck kommt. Bei dem in der Fig. gezeigten Ausführungsbeispiel ist beispielsweise der zumindest eine Gang, welche bei dem zweiten Schritt ausgelegt wird, der Gang 18a. Durch das Auslegen des zumindest einen Gangs 18a beziehungsweise 18b wird die mechanische Parksperre deaktiviert, das heißt ausgelegt. Da zuvor die Verspannung des Teilgetriebes 16 zumindest reduziert oder aufgehoben wird beziehungsweise wurde, kann die Parksperre deaktiviert werden, ohne dass es zu einem von sich im Innenraum des Kraftfahrzeugs aufhaltenden Insassen wahrnehmbaren Ruck kommt. Dabei ist es ferner vorzugsweise vorgesehen, dass das Drehmoment derart bereitgestellt und in das Teilgetriebe 16 beziehungsweise 22 eingeleitet wird, dass eine durch das Bereitstellen und Einleiten des Drehmoments bewirkte Bewegung des Kraftfahrzeugs in Fahrzeuglängsrichtung unterbleibt.

Aus der Fig. ist erkennbar, dass das Antriebselement 38 eine zusätzlich zu dem Antriebsmotor 12 vorgesehene, bezüglich des Antriebsmotors 12 externe Komponente ist. Während der Antriebsmotor 12 eingangsseitig des Doppelkupplungsgetriebes 10 angeordnet ist, da die von dem Antriebsmotor 12 über die Abtriebswelle 14 bereitgestellten Antriebsdrehmomente auf einer beziehungsweise über eine Eingangsseite des Doppelkupplungsgetriebes 10 in das Doppelkupplungsgetriebe 10 und dabei auf die jeweilige Getriebeeingangswelle 20 beziehungsweise 24 eingeleitet werden können, ist das Antriebselement 38 abtriebsseitig des Doppelkupplungsgetriebes 10, das heißt auf der zuvor genannten Ausgangs- beziehungsweise Abtriebsseite des Doppelkupplungsgetriebes 10 angeordnet.

Bei dem in der Fig. gezeigten Ausführungsbeispiel ist das Antriebselement 38 eine elektrische Maschine, welche einen Stator 40 und einen Rotor 42 aufweist. Der Rotor 42 ist von dem Stator 40 antreibbar und dadurch um eine Maschinendrehachse drehbar, insbesondere relativ zu einem in der Fig. nicht gezeigten Gehäuse des Doppelkupplungsgetriebes 10. Dabei sind die Getriebeeingangswellen 20 und 24 sowie die Seitenwellen 32 und 34 jeweils zumindest teilweise in dem genannten Gehäuse angeordnet. Die Getriebeausgangswelle 36 ist dabei um eine Drehachse relativ zu dem Gehäuse drehbar.

Bei dem in der Fig. gezeigten Ausführungsbeispiel fällt die Maschinendrehachse mit der Drehachse zusammen, sodass das Antriebselement 38, insbesondere der Rotor 42, koaxial zu der Getriebeausgangswelle 36 angeordnet ist. Außerdem ist der Rotor 42 auf der Getriebeausgangswelle 36 angeordnet. Insbesondere ist es denkbar, dass der Rotor 42 drehmomentübertragend mit der Getriebeausgangswelle 36 koppelbar oder gekoppelt ist. Dabei ist es insbesondere denkbar, dass der Rotor 42 drehfest mit der Getriebeausgangswelle 36 verbunden ist.

Beispielsweise wird bei dem zweiten Schritt der Gang 18a ausgelegt, während der andere, bei dem ersten Schritt eingelegte Gang 18b eingelegt bleibt. Der erste Schritt und der zweite Schritt werden beispielsweise während eines Stillstands des Kraftfahrzeugs durchgeführt. Dabei hat es sich als besonders vorteilhaft gezeigt, wenn der andere Gang 18b, der bei dem zweiten Schritt eingelegt bleibt, für ein auf den Stillstand und auf das Beenden des Parksperrenzustands folgendes Anfahren des Kraftfahrzeugs verwendet wird.

Ferner ist es denkbar, dass bei dem zweiten Schritt beide Gänge 18a und 18b ausgelegt werden. Außerdem wird beispielsweise die dem Teilgetriebe 16 zugeordnete Kupplung 28 geöffnet. Außerdem wird beispielsweise wenigstens oder genau einer der Gänge 26a-c des Teilgetriebes 22 eingelegt, und die dem anderen Teilgetriebe 22 zugeordnete Kupplung 30 wird geschlossen. Dann wird beispielsweise der eine Gang 26a, b beziehungsweise c des Teilgetriebes 22 verwendet, um das Kraftfahrzeug anzutreiben und schließlich anzufahren. Dieses Antreiben und Anfahren des Kraftfahrzeugs, insbesondere über den einen eingelegten Gang 26a, b beziehungsweise c und die dazugehörige Kupplung 30 erfolgt beispielsweise mittels des Antriebsmotors 12.

Insgesamt ist erkennbar, dass die zuvor beschriebene Parksperre auf besonders bauraum-, gewichts- und kostengünstige Weise realisiert werden kann, da zur Realisierung der mechanischen Parksperre die ohnehin verwendeten Gänge 18a, b verwendet werden. Außerdem ist es durch das Verfahren möglich, die Parksperre komfortabel und somit geräuscharm, insbesondere geräuschlos, zu deaktivieren, da vorher das Drehmoment in das Teilgetriebe 16 beziehungsweise 22 eingeleitet wird.

Das vorzugsweise als elektrische Maschine ausgebildete Antriebselement 38 kann das Drehmoment, insbesondere als ein Antriebsmoment, unter Nutzung von elektrischer Energie beziehungsweise elektrischem Strom bereitstellen. Somit stellt die elektrische Maschine das Drehmoment zum Entsperren des Teilgetriebes 16 bereit. Die elektrische Maschine, insbesondere der Rotor 42, ist beispielsweise drehfest mit der Getriebeausgangswelle 36 verbindbar oder verbunden, sodass das Antriebselement 38 das Drehmoment, insbesondere direkt, auf die Getriebeausgangswelle 36 ausüben kann. Es ist denkbar, dass der Rotor 42 um die Maschinendrehachse in eine erste Drehrichtung und in eine der ersten Drehrichtung entgegengesetzte, zweite Drehrichtung von dem Stator 40 antreibbar und somit drehbar ist. Somit kann die elektrische Maschine beispielsweise ihren Rotor 42 und somit die Getriebeausgangswelle 36 wahlweise in die erste Drehrichtung und in die zweite Drehrichtung drehen, sodass die elektrische Maschine das Drehmoment zum Entsperren des Teilgetriebes 16 wahlweise in die erste Drehrichtung und in die zweite Drehrichtung bereitstellen beziehungsweise auf die Getriebeausgangswelle 36 ausüben kann.

Die Gänge 18a, b werden auch als Sperrgänge bezeichnet. Dabei ist es denkbar, dass die Sperrgänge unabhängig voneinander aktuiert, das heißt eingelegt und ausgelegt werden können.

## Patentansprüche

1. Verfahren zum Betreiben eines ein erstes Teilgetriebe (16), ein zweites Teilgetriebe (22), und eine den Teilgetrieben (16, 28) gemeinsame und sowohl von dem ersten Teilgetriebe (16) als auch von dem zweiten Teilgetriebe (22) antreibbare Getriebeausgangswelle (36) aufweisenden Doppelkupplungsgetriebes (10) eines Kraftfahrzeugs, bei welchem sich das Doppelkupplungsgetriebe (10) in einem Parksperrenzustand befindet, in welchem zwei Gänge (18a, b) eines der Teilgetriebe (16, 22) gleichzeitig eingelegt sind,
**dadurch gekennzeichnet, dass**
zum Beenden des Parksperrenzustands die folgenden Schritte durchgeführt werden:
a) Einleiten eines von einem Antriebselement (38) des Kraftfahrzeugs bewirkten Drehmoments über die den Teilgetrieben (16, 28) gemeinsame Getriebeausgangswelle (36) in das eine und andere Teilgetriebe (16, 22), während die Gänge (18a, b) des einen Teilgetriebes (16) eingelegt sind; und
b) Auslegen zumindest eines der bei Schritt a) gleichzeitig eingelegten Gänge (18a, b) des einen Teilgetriebes (16).

2. Verfahren nach Anspruch 1,
**dadurch gekennzeichnet, dass**
als das Antriebselement (38) eine elektrische Maschine (38) verwendet wird.

3. Verfahren nach einem der vorhergehenden Ansprüche,
**dadurch gekennzeichnet, dass**
bei Schritt b) der zumindest eine Gang (18a) ausgelegt wird, während der andere, bei Schritt a) eingelegte Gang (18b) eingelegt bleibt.

4. Verfahren nach einem der vorhergehenden Ansprüche,
**dadurch gekennzeichnet, dass**
das Verfahren bei einem Stillstand des Kraftfahrzeugs durchgeführt wird.

5. Verfahren nach den Ansprüchen 3 und 4,
**dadurch gekennzeichnet, dass**
der andere Gang (18b), der bei Schritt b) eingelegt bleibt, für ein auf den Stillstand und auf das Beenden des Parksperrenzustands folgendes Anfahren des Kraftfahrzeugs verwendet wird.

6. Verfahren nach Anspruch 5,
**dadurch gekennzeichnet, dass**
zum Anfahren des Kraftfahrzeugs das Kraftfahrzeug mittels eines zusätzlich zu dem Antriebselement vorgesehenen Antriebsmotors angetrieben wird.

7. Verfahren nach einem der vorhergehenden Ansprüche,
**dadurch gekennzeichnet, dass**
das Drehmoment derart bereitgestellt und in das eine und andere Teilgetriebe (16, 22) eingeleitet wird, dass eine durch das Bereitstellen und Einleiten des Drehmoments bewirkte Bewegung des Kraftfahrzeugs in Fahrzeuglängsrichtung unterbleibt.

8. Verfahren nach einem der vorhergehenden Ansprüche,
**dadurch gekennzeichnet, dass**
das Drehmoment derart bereitgestellt und in das eine und andere Teilgetriebe (16, 22) eingeleitet wird, dass das Drehmoment einem durch eine auf das Kraftfahrzeug wirkende Hangabtriebskraft bewirkten und in das eine und andere Teilgetriebe (16, 22) eingeleiteten Hangabtriebsdrehmoment entgegenwirkt.

9. Verfahren nach einem der vorhergehenden Ansprüche,
**dadurch gekennzeichnet, dass**
bei Schritt b) beide, insbesondere alle, Gänge (18a-c) des einen Teilgetriebes (16) ausgelegt werden, die dem einen Teilgetriebe (16) zugeordnete Kupplung (28) geöffnet wird, ein Gang (26a-c) des anderen Teilgetriebes (22) eingelegt und die dem anderen Teilgetriebe (22) zugeordnete Kupplung (30) geschlossen wird.

## Claims

1. Method for operating a dual-clutch transmission (10), having a first transmission part (16), a second transmission part (22) and a transmission output shaft (36) which is common to the transmission parts (16, 28) and is able to be driven both by the first transmission part (16) and by the second transmission part (22), of a motor vehicle, in which the dual-clutch transmission (10) is in a park-locked state in which two gears (18a, b) of one of the transmission parts (16, 22) are simultaneously in an engaged state,
**characterized in that**,
in order to end the park-locked state, the following steps are carried out:
a) introducing a torque effected by a drive element (38) of the motor vehicle into the one and other transmission part (16, 22) via the transmission output shaft (36) common to the transmission parts (16, 28) while the gears (18a, b) of the one transmission part (16) are in an engaged state; and
b) disengaging at least one of the gears (18a, b) of the one transmission part (16) that are simultaneously in an engaged state in step a).

2. Method according to Claim 1,
**characterized in that**
an electric machine (38) is used as the drive element (38).

3. Method according to either of the preceding claims,
**characterized in that**,
in step b), the at least one gear (18a) is disengaged while the other gear (18b) in an engaged state in step a) remains engaged.

4. Method according to one of the preceding claims,
**characterized in that**
the method is carried out with the motor vehicle at a standstill.

5. Method according to Claims 3 and 4,
**characterized in that**
the other gear (18b), which remains engaged in step b), is used for a starting of the motor vehicle that is subsequent to the standstill period and to the ending of the park-locked state.

6. Method according to Claim 5,
**characterized in that**,
in order for the motor vehicle to be started, the motor vehicle is driven by means of a drive motor that is provided in addition to the drive element.

7. Method according to one of the preceding claims,
**characterized in that**
the torque is provided, and is introduced into the one and other transmission part (16, 22), in such a way that a movement, effected by the provision and introduction of the torque, of the motor vehicle in the vehicle longitudinal direction does not occur.

8. Method according to one of the preceding claims,
**characterized in that**
the torque is provided, and is introduced into the one and other transmission part (16, 22), in such a way that the torque counteracts a downhill-force-induced torque which is effected by a downhill force acting on the vehicle and which is introduced into the one and other transmission part (16, 22).

9. Method according to one of the preceding claims,
**characterized in that**,
in step b), both, in particular all, the gears (18a-c) of the one transmission part (16) are disengaged, the clutch (28) assigned to the one transmission part (16) is opened, a gear (26a-c) of the other transmission part (22) is engaged and the clutch (30) assigned to the other transmission part (22) is closed.

## Revendications

1. Procédé de fonctionnement d'une transmission à double embrayage (10) d'un véhicule à moteur, laquelle transmission présente une première transmission partielle (16), une deuxième transmission partielle (22), et un arbre de sortie de transmission (36) commun aux transmissions partielles (16, 28) et pouvant être entraîné à la fois par la première transmission partielle (16) et par la deuxième transmission partielle (22), procédé selon lequel la transmission à double embrayage (10) se trouve dans un état de verrouillage de stationnement dans lequel deux rapports (18a, b) de l'une des transmissions partielles (16, 22) sont enclenchés simultanément, **caractérisé en ce que**,
pour la sortie de l'état de verrouillage de stationnement, les étapes suivantes sont mises en oeuvre :
a) introduire un couple provoqué par un élément d'entraînement (38) du véhicule à moteur, par le biais de l'arbre de sortie de transmission (36) commun aux transmissions partielles (16, 28), dans l'une et l'autre des transmissions partielles (16, 22), pendant que les rapports (18a, b) de l'une des transmissions partielles (16) sont enclenchés ; et
b) désenclencher au moins l'un des rapports (18a, b), enclenchés simultanément lors de l'étape a), de l'une des transmissions partielles (16).

2. Procédé selon la revendication 1,
**caractérisé en ce**
**qu'**une machine électrique (38) est utilisée en tant qu'élément d'entraînement (38).

3. Procédé selon l'une des revendications précédentes, **caractérisé en ce que**
lors de l'étape b) l'au moins un rapport (18a) est désenclenché, pendant que l'autre rapport (18b) enclenché lors de l'étape a) demeure enclenché.

4. Procédé selon l'une des revendications précédentes, **caractérisé en ce que**
le procédé est mis en oeuvre lors d'un arrêt du véhicule à moteur.

5. Procédé selon les revendications 3 et 4,
**caractérisé en ce que**
l'autre rapport (18b), qui demeure enclenché lors de l'étape b), est utilisé pour un démarrage du véhicule à moteur subséquent à l'arrêt et à la sortie de l'état de verrouillage de stationnement.

6. Procédé selon la revendication 5,
**caractérisé en ce que**,
pour le démarrage du véhicule à moteur, le véhicule à moteur est entraîné au moyen d'un moteur d'entraînement prévu en plus de l'élément d'entraînement.

7. Procédé selon l'une des revendications précédentes,
**caractérisé en ce que**
le couple est fourni et introduit dans l'une et l'autre des transmissions partielles (16, 22) de telle sorte qu'un mouvement, provoquée par la fourniture et l'introduction du couple, du véhicule à moteur dans la direction longitudinale du véhicule soit empêché.

8. Procédé selon l'une des revendications précédentes,
**caractérisé en ce que**
le couple est fourni et introduit dans l'une et l'autre des transmissions partielles (16, 22) de telle sorte que le couple s'oppose à un couple descensionnel provoqué par une force descensionnelle agissant sur le véhicule à moteur et introduit dans l'une et l'autre des transmissions partielles (16, 22).

9. Procédé selon l'une des revendications précédentes,
**caractérisé en ce que**
lors de l'étape b), les deux, en particulier tous les rapports (18a-c) de l'une des transmissions partielles (16) sont désenclenchés, l'embrayage (28) associé à l'une des transmissions partielles (16) est ouvert, un rapport (26a-c) de l'autre transmission partielle (22) est enclenché et l'embrayage (30) associé à l'autre transmission partielle (22) est fermé.
